# EUROPÄISCHE PATENTSCHRIFT

(11) **EP 4 127 493 B1**
(45) Veröffentlichungstag und Bekanntmachung des Hinweises auf die Patenterteilung: **15.01.2025**
(21) Anmeldenummer: 21714823.8
(22) Anmeldetag: 17.03.2021
(51) Int. Cl.: F16B 5/06, F16B 5/00

(54) **FESTLEGEVORRICHTUNG ZUM ANEINANDER FESTLEGEN ZWEIER BAUTEILE SOWIE KRAFTFAHRZEUG MIT EINER DERARTIGEN FESTLEGEVORRICHTUNG**
SECURING DEVICE FOR SECURING TWO COMPONENTS AGAINST EACH OTHER, AND MOTOR VEHICLE COMPRISING SUCH A SECURING DEVICE
DISPOSITIF DE FIXATION POUR LA FIXATION DE DEUX COMPOSANTS L'UN CONTRE L'AUTRE, ET VÉHICULE AUTOMOBILE COMPRENANT LEDIT DISPOSITIF DE FIXATION

(30) Priorität: 02.04.2020 DE 102020204324
(43) Veröffentlichungstag der Anmeldung: 08.02.2023
(73) Patentinhaber: Stellantis Auto SAS, 78300 Poissy (FR)
(72) Erfinder: NORDMANN, Bjoern, 65428 Rüsselsheim am Main (DE); SCHERER, Bastian, 65428 Rüsselsheim am Main (DE)
(74) Vertreter: PSIP
(86) Internationale Anmeldenummer: PCT/EP2021/056784
(87) Internationale Veröffentlichungsnummer: WO 2021/197847

(56) Entgegenhaltungen:
- WO-A1-2007/115722
- WO-A1-98/22721
- DE-U1- 202018 103 719
- GB-A- 2 182 019
- US-B1- 6 318 585
- US-B1- 7 129 997

## Beschreibung

Die Erfindung betrifft eine Festlegevorrichtung zum aneinander Festlegen zweier Bauteile sowie ein Kraftfahrzeug mit einer derartigen Festlegevorrichtung.

Bei Kraftfahrzeugen sind Festlegevorrichtungen bekannt, mit denen zwei Bauteile aneinander festgelegt werden können. Werden diese beiden Bauteile beispielsweise im Motorraum des Kraftfahrzeugs miteinander gefügt und/oder eingebaut, können diese für einen Monteur nur schwer zugänglich sein. Insbesondere beim Lösen der beiden Bauteile durch Entriegeln der Festlegevorrichtung durch ein Werkzeug oder mit der Hand, kann sich der Entriegelungsvorgang bei schwerer Zugänglichkeit als umständlich und zeitaufwändig erweisen. Darüber hinaus kann es bei einer zweihändigen Montage nie ganz ausgeschlossen werden, dass das zum Lösen der beiden Bauteile benutzte Werkzeug oder das zu lösende Bauteil unbeabsichtigt aus der Hand entgleitet und schwer erreichbar in den Motorraum fällt.

Aus dem Stand der Technik sind die Druckschriften WO 2007/115722 A1, GB 2 182 019 A, US 7 129 997 B1 sowie die WO 98/22721 A1 bekannt.

Eine Aufgabe eines Ausführungsbeispiels der Erfindung ist, eine Festlegevorrichtung zum aneinander Festlegen zweier Bauteile sowie ein Kraftfahrzeug mit einer derartigen Festlegevorrichtung vorzuschlagen, bei der ein voneinander Lösen der beiden Bauteile, insbesondere bei einer komplizierten Einbausituation, vereinfacht ist.

Diese Aufgabe wird gelöst durch eine Festlegevorrichtung zum aneinander

Festlegen zweier Bauteile, insbesondere eines Kraftfahrzeugs, gemäß Anspruch 1, mit mindestens einem Riegelelement, das an einem ersten Bauteil festlegbar oder festgelegt ist, das quer zu einer Fügerichtung zumindest begrenzt elastisch biegbar ist, das an einem dem ersten Bauteil abgewandten freien Ende einen zumindest quer zur Fügerichtung betätigbaren Betätigungsabschnitt umfasst und das zwischen dem Betätigungsabschnitt und dem ersten Bauteil mindestens eine quer zur Fügerichtung erstreckte Aussparung umfasst, und mit mindestens einer Aufnahmeeinheit, die an einem zweiten Bauteil festlegbar oder festlegbar ist, die mindestens eine quer zur Fügerichtung erstreckte Rastnase umfasst, an der das Riegelelement beim Fügen in Fügerichtung entlanggleitbar und quer oder schräg zur Fügerichtung auslenkbar ist und die in der Aussparung des Riegelelements in einer gefügten Endstellung des Riegelelements einen Hintergriff bezüglich der Fügerichtung bildend anordenbar ist, und die mindestens eine von außen zugängliche, quer oder schräg zur Fügerichtung erstreckte Öffnung umfasst, durch die der Betätigungsabschnitt des Riegelelements zumindest in der gefügten Endstellung von außen zugänglich ist.

Dadurch, dass die Festlegevorrichtung an der Aufnahmeeinheit eine quer zur Fügerichtung erstreckte Rastnase umfasst, kann das Riegelelement auf einfache Weise quer zur Fügerichtung verdrängt werden und in der gefügten Endstellung verrasten. Dadurch, dass die Aufnahmeeinheit eine von außen zugängliche, quer oder schräg zur Fügerichtung erstreckte Öffnung umfasst, durch die der Betätigungsabschnitt des Riegelelements zumindest in der gefügten Endstellung von außen zugänglich ist, kann das Riegelelement auf einfache Weise von außen entriegelt werden.

Hierdurch ist die Zugänglichkeit des Riegelelements verbessert.

Grundsätzlich ist es denkbar, dass die Öffnung der Aufnahmeeinheit und die Rastnase der Aufnahmeeinheit bezüglich des Riegelelements auf unterschiedlichen Seiten angeordnet sind. Es erweist sich als vorteilhaft, wenn die Öffnung und die Rastnase auf der gleichen Seite bezüglich des Riegelelements angeordnet sind.

Hierdurch ist gewährleistet, dass durch die Öffnung der Betätigungsabschnitt des Riegelelements in Richtung der Erstreckung der Rastnase bewegbar ist. Solchenfalls gelangt das Riegelelement, insbesondere die Aussparung des Riegelelements, außer Eingriff mit der Rastnase, wodurch das Riegelelement, bzw. das erste Bauteil, vom zweiten Bauteil entfernbar ist.

Bei einer Ausführungsform der Festlegevorrichtung ist die quer zur Fügerichtung erstreckte Aussparung im Riegelelement quer zur Fügerichtung durchgehend ausgebildet. Bei einem weiteren Ausführungsbeispiel der Festlegevorrichtung umfasst die Aussparung im Riegelelement eine nut- oder rinnenartige Vertiefung, die durch eine Wandung des Riegelelements begrenzt ist.

Der Betätigungsabschnitt des Riegelelements kann durch die Hand eines Monteurs gelöst werden. Es ist erfindungsgemäß vorgesehen, dass die Aufnahmeeinheit mindestens ein quer oder schräg zur Fügerichtung erstrecktes Führungsmittel umfasst, das in der Öffnung mündet und durch das ein Werkzeug entlang einer Entriegelungsrichtung führbar ist, um das Riegelelement aus dem Hintergriff mit der Rastnase zu lösen. Dies ist vorteilhaft, wenn das erste Bauteil und das zweite Bauteil in einer Montagesituation im Motorraum des Kraftfahrzeugs angeordnet sind, die nur schwer zugänglich ist,

Hierdurch kann gewährleistet werden, dass das Werkzeug durch das Führungsmittel zur Öffnung geführt wird, um an dem Betätigungsabschnitt des Riegelelements zu gelangen und um das Riegelelement hierdurch aus dem Hintergriff mit der Rastnase zu lösen. Hierdurch kann insbesondere vermieden werden, dass bei einem Entgleiten des Werkzeugs aus der Hand des Monteurs, das Werkzeug in den Motorraum fällt. Durch das Führungsmittel ist das Werkzeug verliersicher gehalten.

Erfindungsgemäß ist ferner vorgesehen, dass das Führungsmittel mindestens eine domartige Erhebung umfasst, in der ein Führungsschacht angeordnet und von außen zugänglich ist und der in der Aussparung mündet.

Hierdurch kann auf einfache Weise ein Führen des Werkzeugs zur Öffnung und zum Betätigungsabschnitt des Riegelelements bereitgestellt werden.

Die domartige Erhebung, insbesondere der Führungsschacht innerhalb der domartigen Erhebung, kann hohlzylindrisch ausgebildet sein oder einen n-eckigen Querschnitt umfassen. Hierbei wird unter n-eckig ein 3-eckiger, 4-eckiger, 5-eckiger usw., Querschnitt verstanden. N kann hierbei eine ganze Zahl größer 3 sein.

Die Verwendung der Festlegevorrichtung lässt sich steigern, wenn erfindungsgemäß das Führungsmittel auf der dem Führungsschacht abgewandten äußeren Oberfläche ein Befestigungsmittel für eine Komponente des Kraftfahrzeugs, insbesondere einen in einem Elastomer entkoppelten Luftfilter, bildet.

Hierdurch kann das Kraftfahrzeug bauteilreduziert ausgebildet werden.

Die Aufnahmeeinheit kann auf der der Rastnase abgewandten Seite hin quer zur Fügerichtung offen ausgestaltet sein. Darüber hinaus kann die Aufnahmeeinheit ein Gehäuse umfassen. Insbesondere, wenn die Aufnahmeeinheit ein Gehäuse umfasst, erweist es sich als vorteilhaft, wenn die Aufnahmeeinheit mindestens eine Ausnehmung umfasst, die einen zum Querschnitt des Riegelelements korrespondierenden, insbesondere komplementären Querschnitt umfasst und in die das Regelelement zum Fügen des ersten Bauteils mit dem zweiten Bauteil entlang der Fügerrichtung einführbar ist.

Um ein Auslenken des Riegelmittels zu erleichtern, ist bei einer Ausführungsform der Festlegevorrichtung vorgesehen, dass die Rastnase an Ihrem dem Riegelelement zugewandten freien Ende eine schräg zur Fügerichtung verlaufende Oberflächenkontur umfasst, die entgegen der Fügerichtung vom Riegelelement zurückspringend ausgebildet ist.

Hierdurch wird das Riegelmittel beim Auftreffen auf die schräg zur Fügerichtung verlaufende Oberflächenkontur der Rastnase quer zur Fügerichtung von der Rastnase weg verdrängt. Durch das Vorsehen der schräg zur Fügerichtung verlaufenden Oberflächenkontur, kann die Gefahr eines Verkantens des Riegelmittels beim Fügen in Fügerichtung mit der Rastnase zumindest reduziert werden.

Das Riegelmittel ist grundsätzlich begrenzt elastisch bewegbar. Um ein plastisches Verformen des Riegelelements zu verhindern, ist bei einer Ausführungsform der Festlegevorrichtung vorgesehen, dass die Aufnahmeeinheit mindestens einen Anschlag umfasst, der auf einer der Aussparung gegenüberliegenden Seite angeordnet ist und durch den ein Bewegen des Riegelelements beim Betätigen in Entriegelungsrichtung begrenzt ist.

Dieses erweist sich insbesondere dann als vorteilhaft, wenn das erste Bauteil und das zweite Bauteil für einen Monteur schwer zugänglich ist und dieser auf die Verwendung eines Werkzeugs zurückgreifen muss. Durch das Vorsehen eines Anschlags kann ein Überdrücken und hierdurch ein plastisches Verformen des Riegelelements vermieden werden.

Das erste Bauteil und das zweite Bauteil können eine beliebige Komponente des Kraftfahrzeugs umfassen, insbesondere eine beliebige Komponente des Motorraums. Bei einer Ausführungsform der Festlegevorrichtung ist vorgesehen, dass das erste Bauteil ein Tankentlüftungssystem und das zweite Bauteil einen Einlasskrümmer mit einer Befestigung für einen Luftfilter des Kraftfahrzeugs umfasst.

Schließlich wird die Aufgabe gelöst durch ein Kraftfahrzeug mit einem ersten Bauteil, einem zweiten Bauteil und mit mindestens einer Festlegevorrichtung mit mindestens einem der zuvor genannten Merkmale.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Festlegevorrichtung.

### In der Zeichnung zeigt:

- Figur 1: Eine perspektivische Vorderansicht auf ein Ausführungsbeispiel der Festlegevorrichtung in einer ungefügten Anordnung von erstem Bauteil und zweitem Bauteil;
- Figur 2: Eine Schnittansicht der Festlegevorrichtung gemäß Figur 1 in einer gefügten Endanordnung.

Die Figuren zeigen eine insgesamt mit dem Bezugszeichen 2 versehene Festlegevorrichtung zum aneinander Festlegen zweier Bauteile. Hierzu umfasst die Festlegevorrichtung 2 ein Riegelelement 4, das an einem ersten Bauteil 6 festgelegt ist. Das erste Bauteil 6 umfasst bei dem in den Figuren gezeigten Ausführungsbeispiel ein Tankentlüftungssystem. Das Riegelelement 4 ist quer zu einer Fügerichtung 8 zumindest begrenzt elastisch biegbar. An einem dem ersten Bauteil 6 abgewandtem freien Ende umfasst das Riegelelement 4 einen Betätigungsabschnitt 10, der zumindest quer zur Fügerichtung 8 betätigbar ist. Zwischen dem Betätigungsabschnitt 10 und dem ersten Bauteil 6 umfasst das Riegelelement 4 eine quer zur Fügerichtung 8 erstreckte Aussparung 12.

Darüber hinaus umfasst die Festlegevorrichtung 2 eine Aufnahmeeinheit 14, die an einem zweiten Bauteil 16 festgelegt ist. Das bei dem in den Figuren ersichtliche zweite Bauteil 16 umfasst einen Einlasskrümmer für einen Luftfilter eines Kraftfahrzeugs. Die Aufnahmeeinheit 14 umfasst einen quer zur Fügerichtung 8 erstreckte Rastnase 18, an der das Riegelelement 4 beim Fügen in Fügerichtung 8 entlanggleitbar und quer oder schräg zur Fügerichtung 8 auslenkbar ist. Die Rastnase 18 rastet in einer gefügten Endstellung des Riegelelements 4 in die Aussparung 12 des Riegelelements 4 ein und bildet einen Hintergriff entgegen der Fügerichtung 8.

Darüber hinaus umfasst die Aufnahmeeinheit 14 eine von außen zugängliche, quer oder schräg zur Fügerichtung 8 erstreckte Öffnung 20, durch die der Betätigungsabschnitt 10 des Riegelelements 4 zumindest in der gefügten Endstellung von außen zugänglich ist.

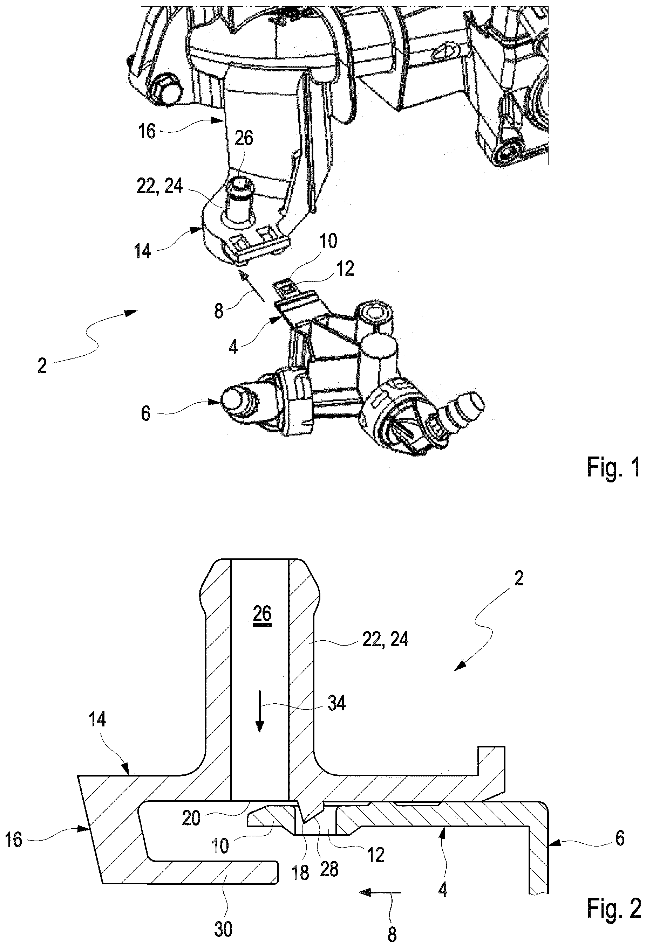

Die Aufnahmeeinheit 14 umfasst eine quer oder schräg zur Fügerichtung 8 erstrecktes Führungsmittel 22, das bei dem in Figur 1 und 2 gezeigten Ausführungsbeispiel eine domartige Erhebung 24 sowie einen in der domartigen Erhebung 24 verlaufenden Führungsschacht 26 umfasst. Durch den Führungsschacht 26 ist die Öffnung 20 von außen zugänglich und ein Werkzeug innerhalb des Führungsschachts 26 führbar.

Figur 2 zeigt eine geschnittene Ansicht der Festlegevorrichtung 2. Aus Figur 2 ist ersichtlich, dass die Rastnase 18 eine schräg zur Fügerichtung 8 verlaufende Oberflächenkontur 28 umfasst, die entgegen der Fügerichtung 8 vom Riegelelement 4 zurückspringend ausgebildet ist.

Um eine Bewegung des Riegelelements 4 quer zur Fügerichtung zu begrenzen, umfasst die Aufnahmeeinheit 14 einen Anschlag 30, der auf einer der Aussparung 12 gegenüberliegenden Seite angeordnet ist und durch den ein Bewegen des Riegelelements 4 beim Betätigen in eine Entriegelungsrichtung 32 begrenzt ist.

Im Folgenden wird kurz die Wirkungsweise der Festlegevorrichtung 2 beschrieben:
Zum Fügen des ersten Bauteils 6 mit dem zweiten Bauteil 16, wird das erste Bauteil 6 mit dem Riegelelement 4 entlang der Fügerichtung 8 auf das zweite Bauteil 16 geschoben. Hierbei wird das Riegelelement 4 beim Auftreffen auf die Rastnase 18 der Aufnahmeeinheit 14 quer zur Fügerichtung verdrängt. Sobald die Rastnase 18 in Eingriff mit der Aussparung 12 des Riegelelements 4 gerät, wird das Riegelelement 4 in seine unausgelenkte Position zurückbewegt und die Rastnase 18 bildet in der Aussparung 12 einen Hintergriff entgegen der Fügerichtung 8.
Zum Lösen des ersten Bauteils 6 vom zweiten Bauteil 16, wird ein Werkzeug durch den Führungsschacht 26 in der domartigen Erhebung 24 des Führungsmittels 22 geschoben. Beim Auftreffen auf den Betätigungsabschnitt 10 des Riegelelements 4, wird das Riegelelement 4 entlang der Entriegelungsrichtung 32 quer zur Fügerichtung 8 bewegt. Diese Bewegung wird begrenzt durch den Anschlag 30. Beim Überführen des Riegelelements 4 in Entriegelungsrichtung 32, gerät die Rastnase 18 in der Aufnahmeeinheit 14 außer Eingriff mit der Aussparung 12 des Riegelelements 4 und das zweite Bauteil 16 kann vom ersten Bauteil 6 entfernt werden.

Die in der vorstehenden Beschreibung sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein. Der Schutzbereich wird durch die Ansprüche bestimmt.

### Bezugszeichenliste

- 2: Festlegevorrichtung
- 4: Riegelelement
- 6: erstes Bauteil
- 8: Fügerichtung
- 10: Betätigungsabschnitt
- 12: Aussparung
- 14: Aufnahmeeinheit
- 16: zweites Bauteil
- 18: Rastnase
- 20: Öffnung
- 22: Führungsmittel
- 24: Erhebung
- 26: Führungsschacht
- 28: Oberflächenkontur
- 30: Anschlag
- 32: Entriegelungsrichtung

## Patentansprüche

1. Festlegevorrichtung (2) zum aneinander Festlegen zweier Bauteile,
insbesondere eines Kraftfahrzeugs, mit mindestens einem Riegelelement (4), das an einem ersten Bauteil (6) festlegbar oder festgelegt ist, das quer zu einer Fügerichtung (8) zumindest begrenzt elastisch biegbar ist, das an einem dem ersten Bauteil (6) abgewandten freien Ende einen zumindest quer zur Fügerichtung (8) betätigbaren Betätigungsabschnitt (10) umfasst und das zwischen dem Betätigungsabschnitt (10) und dem ersten Bauteil (6) mindestens eine quer zur Fügerichtung (8) erstreckte Aussparung (12) umfasst, und mit mindestens einer Aufnahmeeinheit (14), die an einem zweiten Bauteil (16) festlegbar oder festgelegt ist, die mindestens eine quer zur Fügerichtung (8) erstreckte Rastnase (18) umfasst, an der das Riegelelement (4) beim Fügen in Fügerichtung (8) entlanggleitbar und quer oder schräg zur Fügerichtung (8) auslenkbar ist und die in der Aussparung (12) des Riegelelements (4) in einer gefügten Endstellung des Riegelelements (4) einen Hintergriff bezüglich der Fügerichtung (8) bildend anordenbar ist, und die mindestens eine von außen zugängliche, quer oder schräg zur Fügerichtung (8) erstreckte Öffnung (20) umfasst, durch die der Betätigungsabschnitt (10) des Riegelelements (4) zumindest in der gefügten Endstellung von außen zugänglich ist, wobei die Aufnahmeeinheit (14) mindestens ein quer oder schräg zur Fügerichtung (8) erstrecktes Führungsmittel (22) umfasst, das in der Öffnung (20) mündet und durch das ein Werkzeug entlang einer Entriegelungsrichtung (32) führbar ist, um das Riegelelement (4) aus dem Hintergriff mit der Rastnase (18) zu lösen,
**dadurch gekennzeichnet, dass**
a) das Führungsmittel (22) mindestens eine domartige Erhebung (24) umfasst, in der ein Führungsschacht (26) angeordnet und von außen zugänglich ist und der in der Aussparung (12) mündet, und/oder
b) das Führungsmittel (22) auf der dem Führungsschacht (26) abgewandten äußeren Oberfläche ein Befestigungsmittel für eine Komponente des Kraftfahrzeugs, insbesondere einen in einem Elastomer entkoppelten Luftfilter, bildet.

2. Festlegevorrichtung (2) nach Anspruch 1, **dadurch gekennzeichnet, dass** die Öffnung (20) und die Rastnase (18) auf der gleichen Seite bezüglich des Riegelelements (4) angeordnet sind.

3. Festlegevorrichtung (2) nach Anspruch 1 oder 2, **dadurch gekennzeichnet, dass** die Aufnahmeeinheit (14) mindestens eine Ausnehmung umfasst, die einen zum Querschnitt des Riegelelements (4) korrespondierenden, insbesondere komplementären Querschnitt umfasst und in die das Regelelement (4) zum Fügen des ersten Bauteils (6) mit dem zweiten Bauteil (16) entlang der Fügerrichtung (8) einführbar ist.

4. Festlegevorrichtung (2) nach mindestens einem der vorhergehenden Ansprüche, **dadurch gekennzeichnet, dass** die Rastnase (18) an Ihrem dem Riegelelement (4) zugewandten freien Ende eine schräg zur Fügerichtung (8) verlaufende Oberflächenkontur (28) umfasst, die entgegen der Fügerichtung (8) vom Riegelelement (4) zurückspringend ausgebildet ist.

5. Festlegevorrichtung (2) nach mindestens einem der vorhergehenden Ansprüche, **dadurch gekennzeichnet, dass** die Aufnahmeeinheit (14) mindestens einen Anschlag (30) umfasst, der auf einer der Aussparung (12) gegenüberliegenden Seite angeordnet ist und durch den ein Bewegen des Riegelelements (4) beim Betätigen in Entriegelungsrichtung (32) begrenzt ist.

6. Festlegevorrichtung (2) nach mindestens einem der vorhergehenden Ansprüche, **dadurch gekennzeichnet, dass** das erste Bauteil (6) ein Tankentlüftungssystem und das zweite Bauteil (16) einen Einlasskrümmer mit einer Befestigung für einen Luftfilter des Kraftfahrzeugs umfasst.

7. Kraftfahrzeug mit einem ersten Bauteil (6), einem zweiten Bauteil (16) und mit mindestens einer Festlegevorrichtung (2) nach einem der Ansprüche 1 bis 6.

## Claims

1. Fixing device (2) for together Establish two components ,
in particular one motor vehicle , with at least one locking element (4),
that on one first component (6) can be fixed or set is that across a Joining direction (8) at least limited elastic bendable is that on a first component (6) facing away free end at least across to joining direction (8) operable Actuating portion (10) and which is arranged between the actuating portion (10) and the first Component (6) at least one across to joining direction (8) Recess (12 ) and with at least one Recording unit (14) which is connected to a second component (16) definable or determines is at least one across to joining direction (8) Locking lug (18) on which the locking element (4) Joining in joining direction (8) sliding along and across or oblique to joining direction (8) deflectable and which is in the recess (12) of the locking element (4) in a joined End position of the locking element (4) rear grip with respect to the joining direction (8) forming arrangeable is , and at least one of auflen accessible , across or oblique to joining direction (8) Opening (20) through which the actuating portion (10) of the locking element (4) at least in the joined end position of auflen accessible is , wherein the receiving unit (14) is at least a across or oblique to joining direction (8) extended Guide means (22) which opens into the opening (20) and through which a Tool along one unlocking direction (32) is to release the locking element (4) from the rear grip with the locking lug (18) solve , through this **characterized by**
a) the guide means (22) at least one dome-like Survey (24) includes , in which a Guide shaft (26 ) and from outside accessible and which opens into the recess ( 12), and/ or
b) the guide means (22) on the side facing away from the guide shaft (26) outer Surface a Fasteners for a component of the motor vehicle , in particular a decoupled in an elastomer air filter, forms .

2. Fixing device (2) according to claim 1, characterized characterized that the Opening (20) and the locking lug (18) on the same Page regarding the locking element ( 4) are .

3. Fixing device (2) according to Claim 1 or 2, characterized **characterized by** the receiving unit (14) at least one recess which includes a for the Cross-section of the locking element (4) corresponding , in particular
complementary cross-section and into which the control element (4) for Joining the first component (6) with the second Component (16) can be inserted along the joining direction (8) is .

4. Fixing device (2) according to at least one of the previous claims , thereby **characterized in that** the locking lug (18) on its side facing the locking element (4) free end oblique to joining direction (8) Surface contour (28) which extends opposite to the joining direction (8) from the locking element (4) retracted trained is .

5. Fixing device (2) according to at least one of the previous claims , thereby **characterized in that** the receiving unit (14)
at least a Stop (30) which is located on a recess (12) opposite Page arranged and through which a Moving the locking element (4) when Actuation in unlocking direction (32) limited is .

6. Fixing device (2) according to at least one of the previous claims , thereby characterized that the first component (6 ) tank ventilation system and the second component (16) a intake manifold with one Mounting for a air filter of the vehicle includes .

7. motor vehicle with one first component (6), a second component (16) and with at least one Fixing device (2) according to one of claims 1 to 6.

## Revendications

1. Dispositif de fixation (2) pour les uns aux autres Établir deux composants ,
en particulier un véhicule à moteur, avec au moins un élément de verrouillage (4),
que sur un d'abord Le composant (6) peut être fixé ou ensemble c'est à dire , c'est à travers une Direction de jonction (8) au moins limité élastique pliable est -ce à l'un des premiers Composant (6) tourné vers l'extérieur extrémité libre au moins à travers à La direction de jonction (8) peut être actionnée Section d'actionnement (10) et entre la section d'actionnement (10) et le premier Composant (6) au moins un à travers à Direction de jonction (8) étendue L'évidement (12) comprend , et avec au moins un Unité d'enregistrement (14), qui se trouve sur un deuxième Composant (16) définissable ou déterminé est -ce au moins un à travers à Direction de jonction (8) étendue Patte de verrouillage (18) sur laquelle se trouve l' élément de verrouillage (4) L'assemblage peut être glissé le long et à travers dans la direction d'assemblage (8). ou oblique à Direction de jointure (8) déviable se trouve et dans l' évidement (12) de l' élément de verrouillage (4) en un rejoint Position finale de l' élément de verrouillage (4) . Sous-portée par rapport à la direction de jonction (8). peut être arrangé est , et le moins un d' Auflen accessible , transversal ou obliquement à Direction de jonction (8) étendue Ouverture (20) à travers laquelle la section d'actionnement ( 10) de l' élément de verrouillage (4) au moins dans celui assemblé Position finale de l'auflen accessible est , grâce à quoi l'unité d'enregistrement (14) est au moins un à travers ou oblique à La direction de jonction (8) s'étend Des moyens de guidage (22) qui débouchent dans l' ouverture (20) et à travers lesquels Outil le long de un Le sens de déverrouillage (32) peut être guidé consiste à saisir l' élément de verrouillage (4) par l'arrière avec l' ergot de verrouillage ( 18). résoudre , à travers ça a marqué que
a) les moyens de guidage (22) au moins un en forme de dôme L'enquête (24) comprend , dans laquelle un Arbre de guidage (26) disposé et vu de l' extérieur accessible est et qui débouche dans l' évidement (12) , et/ ou
b) les moyens de guidage (22) sur le côté opposé à l' arbre de guidage (26). externe Surface un Attaches pour un composante du Véhicule automobile , en particulier un découplé dans un élastomère Filtre à air, formes .

2. Dispositif de fixation (2). Revendication 1, donc a marqué que le Ouverture (20) et ergot de verrouillage (18) sur celle-ci Page concernant le Elément de verrouillage (4) disposé sont .

3. Dispositif de fixation (2). Revendication 1 ou 2, donc a marqué que l' unité d'enregistrement (14) au moins un récréation comprend celui- là pour le Coupe transversale de l' élément de verrouillage (4) correspondant, notamment complémentaire Coupe transversale comprend et dans lequel l' élément de commande (4) pour Ajout du premier Composant (6) avec le deuxième Le composant (16) peut être inséré le long de la direction de jonction (8). est .

4. Dispositif de fixation (2). au moins un des précédents
Réclamations , donc **caractérisé en ce que** l' ergot de verrouillage (18) fait face à l' élément de verrouillage ( 4). fin libre un obliquement à Direction de jointure (8). Contour de surface ( 28 ) opposé à la direction de jonction ( 8). Évidements pour élément de verrouillage (4) qualifié est .

5. Dispositif de fixation (2). au moins un des précédents Réclamations ,
donc **caractérisé en ce que** l' unité d'enregistrement (14)
au moins un La butée (30) comporte , sur l'un des évidements (12) opposés Page arrangé est et à travers celui Déplacer l' élément de verrouillage (4) lorsque L'appui dans le sens de déverrouillage (32) est limité est.

6. Dispositif de fixation (2). au moins un des précédents
Réclamations , donc a marqué que le premier Composant (6) . Système de ventilation du réservoir et le deuxième Composant (16) . Collecteur d'admission avec
un Fixation pour un Filtre à air pour véhicules automobiles comprend .

7. véhicule automobile avec un d'abord Composant (6), un deuxième Composant (16) et avec au moins un Dispositif de fixation (2). l'une des revendications 1 à 6.
